Europäisches Patentamt

European Patent Office

Office européen des brevets

(19)

(11) Numéro de publication : **0 479 731 A2**

## (12) DEMANDE DE BREVET EUROPEEN

(21) Numéro de dépôt : **91810775.6**

(22) Date de dépôt : **02.10.91**

(51) Int. Cl.⁵ : **G01N 27/414,** G01N 27/333

(30) Priorité : **02.10.90 CH 3163/90**

(43) Date de publication de la demande :
**08.04.92 Bulletin 92/15**

(84) Etats contractants désignés :
**CH DE FR GB IT LI**

(71) Demandeur : **CENTRE SUISSE D'ELECTRONIQUE ET DE MICROTECHNIQUE S.A.
Maladière 71
CH-2007 Neuchâtel (CH)**

(72) Inventeur : **van den Berg, Albert
Rue des Berthoudes 26
CH-2000 Neuchâtel (CH)**
Inventeur : **Grisel, Alain
Ch. de la Gottetaz 9
CH-1012 Lausanne (CH)**

(74) Mandataire : **Brulliard, Joel
c/o CENTRE SUISSE D'ELECTRONIQUE ET DE MICROTECHNIQUE S.A. Maladière 71
CH-2007 Neuchâtel (CH)**

(54) **Dispositif semi-conducteur comportant une membrane possédant une sensibilité sélective aux ions et procédé de réalisation de la membrane.**

(57) L'invention concerne un dispositif semi-conducteur comportant une membrane possédant une sensibilité sélective aux ions et un procédé de réalisation de la membrane. Le dispositif semi-conducteur de l'invention trouve une application pour la mesure de la concentration de divers types d'ions, en particulier pour la mesure dans des solutions de volume restreint.

EP 0 479 731 A2

L'invention se rapporte aux dispositifs semi-conducteurs sensibles aux ions en général et concerne, plus particulièrement, un dispositif semi-conducteur comportant une membrane possédant une sensibilité sélective aux ions et un procédé de réalisation de la membrane.

Les dispositifs semi-conducteurs connus sensibles aux ions, tels par exemple les transistors ISFET (Ion-Sensitive Field Affect Transistor), détectent et mesurent des grandeurs chimiques d'un milieu liquide. Le transistor ISFET est un transistor à effet de champ, à grille isolée dont la grille est remplacée par une solution conductrice et dont la couche isolante est une membrane qui réagit de manière spécifique avec certains ions présents dans la solution. La réponse du transistor ISFET est donc dépendante de la nature chimique et de la concentration des ions présents dans la solution. Un problème existant est la réalisation de membranes dont la sélectivité chimique est liée à son mode de fabrication et à l'utilisation des dispositifs comportant ces membranes donc des applications spécifiques, en particulier pour la mesure sélective d'ions dans des volumes très petits.

Une solution connue consiste à réaliser une membrane en polymère. Le dispositif semi-conducteur dans lequel la membrane est formée, permet la détection sélective des ions ou le contrôle de la diffusion d'espèces chimiques du milieu extérieur vers la zone de détection.

Antre autres membranes en polymère sélectives aux ions, on peut citer:

– Les membranes en PVC, dans lesquelles sont implantés un plastifiant et des ionophores, qui ont une faible adhésion sur le support semi-conducteur mais une excellente sensibilité et sélectivité ionique. Les techniques de réalisation de ces membranes ne permettent toutefois pas un dépôt sélectif.

– Les membranes en PVC modifié chimiquement qui, bien que leur adhésion sur le support soit améliorée, deviennent instable par manque de plastifiant.

– Les membranes en PVC comprenant un polymère plastifiant qui ne présentent pas l'inconvénient des membranes précédentes, mais ont une faible sélectivité aux ions.

– Les membranes en silicone du type RTV qui ne présentent pas non plus l'inconvénient précédent.

Toutes ces membranes en polymère ont comme inconvénient commun de ne pas pouvoir être déposées sélectivement sur un support. De plus, elles ne permettent pas d'utiliser les procédés de photolithographie; c'est à dire qu'elles ne sont pas photopolymérisables.

Aussi un but de la présente invention est un dispositif semi-conducteur comportant une membrane possédant une bonne sélectivité aux ions, laquelle membrane ne présente pas les limitations ou inconvénients mentionnés ci-dessus et peut être réalisée par les techniques de la microélectronique.

Un autre but est un dispositif semi-conducteur comportant une membrane possédant une sensibilité sélective aux ions possédant une excellente adhésion sur son support et une durée de vie importante.

Un autre but est un procédé de réalisation d'une membrane possédant une sensibilité sélective aux ions.

Conformément à l'invention, ledit dispositif semi-conducteur comportant une membrane possédant une sensibilité sélective aux ions, se caractérise en ce que la membrane est constituée de polysiloxane contenant des groupes fonctionnels méthacryliques et en ce qu'elle peut comprendre en outre un ou plusieurs ionophores et/ou un sel lipophilique et/ou un photoinitiateur de polymérisation.

Un avantage du dispositif selon l'invention est que la membrane réalisée ne nécessite pas l'addition de plastifiant lors de son application comme membrane sensible aux ions.

Un autre avantage du dispositif selon l'invention est son utilisation comme dispositif à diffusion de gaz.

Selon une caractéristique de l'invention, le procédé de réalisation d'une membrane possédant une sensibilité sélective aux ions est le suivant:

– prétraitement chimique de la surface du support;

– dépôt sur tout le support d'un prépolymère constitué de polysiloxane méthacrylique et pouvant comprendre un ionophore et/ou un sel lipophilique et/ou un photoinitiateur de polymérisation;

– applanissement éventuel de la surface du prépolymère;

– exposition du support recouvert du prépolymère à des rayons UV à travers un masque et

– développement et gravure de la membrane de polysiloxane ainsi formée à l'aide d'un solvant approprié.

Un avantage du procédé de réalisation de la membrane selon l'invention est de permettre la fabrication de nombreux dispositifs identiques sur un même support.

Un autre avantage du procédé de réalisation de la membrane selon l'invention est de permettre la fabrication de dispositifs ayant des membranes différentes sur un même support.

Un autre avantage du procédé de réalisation de la membrane selon l'invention est que la fonctionalité du groupe méthacrylique permet d'établir des liaisons chimiques fortes lors de la photoplymérisation avec un support prétraité chimiquement avec une sustance possédant les mêmes groupes fonctionnels.

Un autre avantage du procédé de réalisation de la membrane selon l'invention est de permettre la fabrication de membranes d'épaisseur importante.

D'autre buts, caractéristiques et avantages de la présente invention apparaîtront plus clairement à la lecture de la description suivante, laquelle description porte plus particulièrement sur une membrane possédant une sensibilité sélective aux ions et sur un procédé de réalisation de la membrane.

Conformément à l'invention, la membrane formée sur la surface de détection d'un dispositif semi-conducteur sensible aux ions est contituée d'un polysiloxane contenant des groupes fonctionnels méthacryliques et peut comprendre en outre:

– au moins un ionophore, par exemple des ions potassium $K^+$ (Valinomycin commercialisé par la société FLUKA) ou des ions calcium $Ca^{++}$ ou tout ionophore utilisé dans les membranes en PVC connues et/ou

– au moins un sel lipophilique, par exemple du tétraphénylborate de potassium et/ou

– au moins un photoinitiateur de polymérisation, par exemple du diméthoxyphénylacétophénone dont la caractéristique est d'être photopolimérisable in situ.

Les paramètres critiques de la membrane pour qu'elle ait les propriétés désirées (contraintes mécaniques, photopolymérabilité, possibilité d'être réalisée selon un dessin particulier, structurabilité, constante diélectrique faible) peuvent être contrôlés en variant la quantité d'initiateur, le temps d'exposition aux UV ou la quantité de polysiloxane méthacrylique et éventuellement par l'introduction d'un polysiloxane cyané de polarité élevée.

Dans un mode de fonctionnement du dispositif semi-conducteur permettant une détection sélective des ions, la membrane est réalisée en incorporant des ionophores.

L'invention est illustrée, pour différentes applications du dispositif sensible aux ions, par les exemples non limitatifs suivants avec différentes compositions de membrane.

## EXAMPLE 1:

Sur la surface de la région de arille d'un capteur FET pour ions calcium $Ca^{++}$, on réalise une membrane épaisse d'environ 50 μm, en formant un revêtement constitué de polysiloxane méthacrylique comprenant 2% d'ionophores pour les ions calcium, par exemple ETH 129, 0,5% de tétraphénylborate de potassium et 1% de photoinitiateur.

## EXAMPLE 2:

Sur la surface de la région de arille d'un capteur FET pour ions potassium $K^+$, on réalise une membrane épaisse d'environ 50 μm, en formant un revêtement constitué de polysiloxane méthacrylique comprenant 2% de valinomycin, 0,5% de tétraphénilborate de potassium et 1% de photoinitiateur.

## EXAMPLE 3:

Sur la surface de la région de grille d'un capteur FET pour ions calcium $Ca^{++}$, on réalise une membrane épaisse d'environ 100 μm, en formant un revêtement constitué de polysiloxane méthacrylique comprenant 2% d'ionophores pour les ions calcium, 0,5% de sels lipophiliques et 1% de photoinitiateur.

## EXAMPLE 4:

Sur la surface de la région de grille d'un capteur FET pour ions potassium $K^+$, on réalise une membrane épaisse d'environ 100 μm, en formant un revêtement constitué de polysiloxane méthacrylique comprenant 2% de valinomycin, 0,5% de sels lipophiliques et 1% de photoinitiateur.

Conformément à l'invention, le procédé de réalisation d'une membrane possédant une sensibilité sélective aux ions sur la surface du capteur FET est le suivant: on effectue un prétraitement chimique de la surface du support pour permettre une très bonne adhésion de la membrane sur la surface du support grâce à une liaison chimique par silylation. Le prétraitement chimique peut être effectué à l'aide de méthacrylate de triméthoxysilylpropyle à 10% dans le toluène. On dépose sur tout le support une quantité bien définie du prépolymère constituant la membrane, le prépolymère pouvant éventuellement être dilué dans un solvant. On peut déposer un mince film Mylar sur le prépolymère. On peut applanir la surface du prépolymère en appliquant sur le film Mylar une plaque de verre. On expose le support recouvert du prépolymère à des rayons UV à travers un masque. On peut alors supprimer le film Mylar. On développe et on grave la membrane de polysiloxane ainsi formée à l'aide d'un solvant approprié.

Un avantage du prétraitement chimique selon l'invention est la très bonne adhésion de la membrane sur la surface du support. Des essais d'adhésion en disposant la surface dans une solution de tampon à pH 7 dans laquelle se propagent des ondes à ultrason ont montré que sans prétraitement chimique, l'ensemble des membranes se séparent du support avant un délai de 5 min. Par contre, lorsque l'on applique les mêmes essais à des membranes formées sur la surface du support grâce à une liaison chimique par silylation, des pertes visibles d'adhésion des membranes n'apparaissent pas avant un délai de deux heures.

Le procédé selon l'invention permet la formation de membranes d'épaisseur de l'ordre de 50 à 100 μm pouvant être formées sur un support selon une position et des contours ayant une définition meilleure que 20 μm.

Le dispositif semi-conducteur de l'invention comportant une membrane possédant une sensibilité sélective aux ions peut être utilisé pour mesurer la concentration de divers types d'ions, tel que, par exemple, les ions hydrogène, les ions sodium, les ions potassium, les ions calcium et les ions chlore. Le dispositif semi-conducteur peut encore être utilisé pour la détection ou la mesure d'une enzyme ou d'un gaz.

La nature non polaire (constante diélectrique faible) de la membrane et sa nature non toxique (de type siloxane) permet une utilisation du dispositif semi-conducteur dans une application biomédicale et comme diffuseur de gaz.

Bien que la présente invention ait été décrite dans le cadre d'un exemple de réalisation particulier, il est clair, cependant, qu'elle est susceptible de modifications ou de variantes sans sortir de son domaine. En particulier, une structure comportant une double membrane peut être formée sur la surface de la région de grille d'un transistor FET. Par exemple, dans le cas d'un capteur sensible au calcium, une première membrane en présilyle méthacrylate de 3-(triméthoxysilyle)propyl est formée par une technique photolytographique avant la formation de la membrane possédant une sensibilité sélective aux ions.

## Revendications

1. Dispositif semi-conducteur comportant une membrane possédant une sensibilité sélective aux ions, caractérisé en ce que la membrane est constituée de polysiloxane contenant des groupes fonctionnels méthacryliques et en ce qu'elle peut comprendre en outre un ionophore et/ou un sel lipophilique et/ou un photoinitiateur de polymérisation.

2. Dispositif semi-conducteur selon la revendication 1, caractérisé en ce que la membrane constituée de polysiloxane contenant des groupes fonctionnels méthacryliques comprend 1 à 3% de ionophore, 0,2 à 0,7% de sels lipophiliques et 0,5 à 1,5% d'un photoinitiateur de polymérisation.

3. Dispositif semi-conducteur selon l'une des revendications 1 et 2, caractérisé en ce que l'épaisseur de la membrane est comprise entre 50 et 100 $\mu$m.

4. Procédé de réalisation d'une membrane possédant une sensibilité sélective aux ions, caractérisé par:

    – un prétraitement chimique de la surface du support;

    – un dépôt sur tout le support d'un prépolymère constitué de polysiloxane méthacrylique et pouvant comprendre un ionophore et/ou un sel lipophilique et/ou un photoinitiateur de polymérisation;

    – un applanissement éventuel de la surface du prépolymère;

    – une exposition du support recouvert du prépolymère à des rayons UV à travers un masque et

    – un développement et gravure de la membrane de polysiloxane ainsi formée à l'aide d'un solvant approprié.

5. Procédé de réalisation de la membrane selon la revendication 4, caractérisé en ce que l'on dépose un mince film Mylar sur le prépolymère déposé sur tout le support et en ce que l'on décole ce film aprés exposition du support recouvert du prépolymère à des rayons UV.